(19) Europäisches Patentamt
European Patent Office
Office européen des brevets

(11) **EP 2 771 714 B1**

(12) **EUROPÄISCHE PATENTSCHRIFT**

(45) Veröffentlichungstag und Bekanntmachung des Hinweises auf die Patenterteilung:
**08.08.2018   Patentblatt 2018/32**

(51) Int Cl.:
***G01D 1/00*** *(2006.01)*     ***G06F 17/18*** *(2006.01)*
***G01S 19/49*** *(2010.01)*

(21) Anmeldenummer: **12787662.1**

(22) Anmeldetag: **24.10.2012**

(86) Internationale Anmeldenummer:
**PCT/EP2012/071092**

(87) Internationale Veröffentlichungsnummer:
**WO 2013/060750 (02.05.2013 Gazette 2013/18)**

(54) **SENSORSYSTEM ZUR EIGENSTÄNDIGEN BEWERTUNG DER INTEGRITÄT SEINER DATEN**

SENSOR SYSTEM FOR INDEPENDENTLY EVALUATING THE INTEGRITY OF THE DATA OF THE SENSOR SYSTEM

SYSTÈME DE DÉTECTION CONÇU POUR UNE AUTOÉVALUATION DE L'INTÉGRITÉ DE SES DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2011   DE 102011085134**
       **21.11.2011   DE 102011086710**
       **02.05.2012   DE 102012207297**

(43) Veröffentlichungstag der Anmeldung:
**03.09.2014   Patentblatt 2014/36**

(73) Patentinhaber: **Continental Teves AG&Co. Ohg 60488 Frankfurt (DE)**

(72) Erfinder:
• **STEINHARDT, Nico 60327 Frankfurt (DE)**
• **WINNER, Hermann 76467 Bietigheim (DE)**

(56) Entgegenhaltungen:
**EP-A2- 0 498 655     WO-A2-95/34850**

• **MAYBECK P: "Stochastic Models, Estimation and Control", STOCHASTIC MODELS, ESTIMATION AND CONTROL, ELSEVIER SCIENCE AND TECHNOLOGY, Bd. 1, 1. Januar 1979 (1979-01-01), Seiten 1-19, XP007921409, ISBN: 0-12-480701-1**
• **GREG WELCH AND GARY BISHOP: "An Introduction to the Kalman Filter", UNC-CHAPEL HILL, TR 95-041,, Nr. TR 95-041, 24. Juli 2006 (2006-07-24), Seiten 1-16, XP007921410,**
• **GREG WELCH ET AL: "An Introduction to the Kalman Filter", SIGGRAPH 2001,, 12. August 2001 (2001-08-12), Seiten 1-81, XP007921411,**
• **YANRUI GENG ET AL: "Novel Approaches to Adaptive Estimation of Kalman Filter Fading Factor in Integrated GPS/INS Navigation Systems", 20070101, 1. Januar 2007 (2007-01-01), XP007921412,**

EP 2 771 714 B1

**Beschreibung**

Die Erfindung betrifft ein Sensorsystem gemäß Oberbegriff von Anspruch 1 sowie dessen Verwendung in Kraftfahrzeugen, insbesondere in Automobilen.

Offenlegungsschrift DE 10 2010 063 984 A1 beschreibt ein Sensorsystem, umfassend mehrere Sensorelemente und eine Signalverarbeitungseinrichtung, wobei die Signalverarbeitungseinrichtung so ausgelegt ist, dass die Ausgangssignale der Sensorelemente gemeinsam ausgewertet werden.

Die Druckschrift Maybeck P, Stochastic Models, Estimation and Control, Elsevier Science and Technology, Bd. 1, (Seiten 1-19), beschreibt die Funktionsweise eines linearen Kalman-Filters. Die Funktion eines Kalman-Filters liegt in der Schätzung eines Systemzustands eines Systems. Oftmals kann der Systemzustand nicht direkt gemessen werden, sondern kann lediglich anhand von bekanntem Systemverhalten und messbaren, indirekt oder direkt mit dem zu schätzenden Systemzustand in Zusammenhang stehenden Messwerten geschätzt werden. Hierzu können Messwerte unterschiedlicher Messgrößen, aber auch Messwerte, die auf unterschiedlichen Messprinzipien basieren, herangezogen werden. Das Kalman-Filter liefert für jeden durchgeführten Fusionsvorgang einen Unsicherheitsfaktor des ermittelten Schätzwertes. Der Unsicherheitsfaktor des Schätzwertes basiert auf den Unsicherheitsfaktoren der berücksichtigten Messwerte sowie auf den Unsicherheitsfaktoren der zuvor durchgeführten Schätzvorgänge.

Der Erfindung liegt die Aufgabe zu Grunde, ein Sensorsystem vorzuschlagen, welches eine relativ hohe Eigensicherheit bezüglich seiner Signalverarbeitung bietet bzw. ermöglicht und/oder welches für sicherheitskritische Anwendungen bzw. einen sicherheitskritischen Einsatz geeignet ist.

Diese Aufgabe wird gelöst durch das Sensorsystem gemäß Anspruch 1.

Die Erfindung beschreibt ein Sensorsystem, umfassend mehrere Sensorelemente, die so ausgebildet sind, dass sie zumindest teilweise unterschiedliche primäre Messgrößen erfassen und/oder zumindest teilweise unterschiedliche Messprinzipien nutzen, des Weiteren umfassend eine Signalverarbeitungseinrichtung, wobei die Signalverarbeitungseinrichtung einen Fusionsfilter aufweist, welches so ausgebildet ist, dass es die Sensorsignale der Sensorelemente zumindest teilweise gemeinsam auswertet und die Informationsqualität der Sensorsignale bewertet sowie wenigstens ein Datum einer physikalischen Größe, insbesondere zumindest teilweise, auf Basis der Sensorsignale von Sensorelementen berechnet, welche diese physikalische Größe direkt erfassen oder aus deren Sensorsignalen diese physikalische Größe berechenbar ist, wobei die Signalverarbeitungseinrichtung eine Integritätseinheit umfasst, die so ausgebildet ist, dass sie eine Information über die Widerspruchsfreiheit des wenigstens einen Datums der physikalischen Größe bereitstellt, wobei die Information über die Widerspruchsfreiheit dieses Datums dieser physikalischen Größe wenigstens auf Basis der direkt oder indirekt redundant vorliegenden Sensorinformationen berechnet wird, wobei die Integritätseinheit als Information über die Widerspruchsfreiheit zu dem wenigstens einen Datum der physikalischen Größe ein Relativ-Konfidenzmaß als relative Konfidenzinformation bereitstellt, welche abhängig ist von der relativen Abweichung der Daten und/oder Messwerte wenigstens zweier Sensorinformationsquellkanäle auf deren Basis das entsprechende wenigstens eine Datum der physikalischen Größe berechnet wird.

Unter dem Begriff Datum wird zweckmäßigerweise der Singular des Begriffs Daten verstanden.

Unter einer primären Messgröße wird vorzugsweise die Messgröße verstanden, für deren Erfassung das Sensorelement hauptsächlich ausgelegt ist und die insbesondere direkt erfasst wird.

Mit der Formulierung "direkt oder indirekt redundant vorliegenden Sensorinformationen" sind vorzugsweise Sensorinformationen gemeint, welche durch Parallelredundanz, als direkte Redundanz oder durch analytische Redundanz, als indirekte Redundanz, vorliegen.

Die Signalverarbeitungseinrichtung umfasst bevorzugt eine Integritätseinheit, in welcher die Informationen über die Widerspruchsfreiheit erzeugt werden.

Es ist bevorzugt, dass die Signalverarbeitungseinrichtung ein Fusionsfilter aufweist, welches im Zuge der gemeinsamen Auswertung zumindest der Sensorsignale und/oder daraus abgeleiteter Signale der Sensorelemente einen definierten Fusionsdatensatz bereitstellt, wobei dieser Fusionsdatensatz jeweils Daten zu definierten physikalischen Größen aufweist, wobei der Fusionsdatensatz zu wenigstens einer physikalischen Größe ein Datum dieser physikalischen Größe und eine Information über die Widerspruchsfreiheit dieses Datums der physikalischen Größe umfasst.

Es ist zweckmäßig, dass die Signalverarbeitungseinrichtung so ausgebildet ist, dass der definierte Fusionsdatensatz zusätzlich zumindest ein Statusdatum eines Sensorelements aufweist, welches das Sensorelement mittels einer Eigendiagnose selbst bereitstellt, wobei dieses Statusdatum bei der Berechnung der Information über die Widerspruchsfreiheit zumindest eines Datums einer physikalischen Größe berücksichtigt wird.

Es ist zweckmäßig, dass die Signalverarbeitungseinrichtung so ausgebildet ist, dass sie pro Sensorinformationsquellkanal jeweils einen Messwert und/oder eine Messinformation und/oder eine aus einer Messinformation abgeleiteten Wert sowie ein Unsicherheitsmaß dieses Sensorinformationsquellkanals zur Berechnung der relativen Konfidenzinformation verwendet.

Die Signalverarbeitungseinrichtung ist insbesondere so ausgebildet, dass für das wenigstens eine Datum einer physikalischen Größe die zugeordnete relative Konfidenzinformation berechnet wird als das relative Konfidenzmaß $K_r$ mit

$$K_r = \frac{\int_{-\infty}^{+\infty} \prod_{i=1}^{i=n} p_i(x, \mu_i, \sigma_i) \cdot dx}{\int_{-\infty}^{+\infty} \prod_{i=1}^{i=n} p_i(x, 0, \sigma_i) \cdot dx} \qquad , \text{wobei} \quad 0 \leq K_r \leq 1$$

und wobei $n$ als die Anzahl der verglichenen Sensorinformationsquellkanäle,
$p_i$ als die Wahrscheinlichkeitsdichtefunktion des $i$-ten Sensorinformationsquellkanals, und dabei insbesondere $\mu_i$ als der Mittelwert der Wahrscheinlichkeitsverteilung und $\sigma_i$ als Standardabweichung der Wahrscheinlichkeitsverteilung, definiert oder definierbar sind.

Es ist bevorzugt, dass die Signalverarbeitungseinrichtung so ausgebildet ist, dass sie zusätzlich oder alternativ zu einem Relativ-Konfidenzmaß als Information über die Widerspruchsfreiheit zu wenigstens einem Datum einer physikalischen Größe ein Absolut-Konfidenzmaß als absolute Konfidenzinformation bereitstellt, welche abhängig ist von einem Unsicherheitsmaß wenigstens zweier Sensorinformationsquellkanäle auf deren Basis das entsprechende wenigstens eine Datum der physikalischen Größe berechnet wird.

Insbesondere ist die Signalverarbeitungseinrichtung so ausgebildet, dass für das wenigstens eine Datum einer physikalischen Größe die zugeordnete absolute Konfidenzinformation berechnet wird als das absolute Konfidenzmaß

$K_a$ mit $\quad K_a = \left[ \sum_{i=1}^{i=n} \sigma_i^{-2} \right]^{-\frac{1}{2}}$ oder $\quad K_a = \sqrt{\sum_{i=1}^{i=n} \sigma_i^2}$ und dabei mit

$n$ als der Anzahl der verglichenen Sensorinformationsquellkanäle und $\sigma_i$ als die Standardabweichung oder Varianz des $i$-ten Sensorinformationsquellkanals.

Es ist zweckmäßig, dass die Signalverarbeitungseinrichtung so ausgebildet ist, dass zu wenigstens einem Datum einer physikalischen Größe eine Bewertung durchgeführt wird, ob die Wiederspruchsfreiheit hinreichend groß ist oder nicht, wobei diese Bewertung durchgeführt wird, indem berechnet wird, ob die relative Konfidenzinformation und/oder das relative Konfidenzmaß einen definierten Schwellwert überschreitet.

Es ist bevorzugt, dass ein Wegfall eines Sensorinformationsquellkanals berücksichtigt wird bei der Berechnung der Information über die Widerspruchsfreiheit. Insbesondere ist die Signalverarbeitungseinrichtung dabei so ausgebildet, dass im Fall, dass in einem definierten Zeitintervall, in welchem die Daten wenigstens eines Sensorinformationsquellkanals zur Berechnung der Information über die Widerspruchsfreiheit genutzt werden, nur noch ein einziger Sensorinformationsquellkanal verfügbar ist und/oder nur ein einziger Sensorinformationskanal ein Datum bereitstellt, kein relatives Konfidenzmaß berechnet wird und dass in diesem Fall für das absolute Konfidenzmaß der Wert 0 oder ein Wert gegen unendlich oder ein definierter Wert angenommen wird oder dass das absolute Konfidenzmaß in diesem Fall nicht berechnet wird.

Unter einem Unsicherheitsmaß wird vorzugsweise ein Streuungsmaß und/oder eine Streuung und/oder eine Varianz und/oder eine Genauigkeit oder ein Genauigkeitsmaß verstanden, welches aus dem Unsicherheitsmaß berechenbar bzw. umrechenbar ist.

Vorzugsweise ist das Unsicherheitsmaß abhängig von oder folgt einer Wahrscheinlichkeitsdichtefunktion oder einer Standardabweichung oder einer Varianz. Die Wahrscheinlichkeitsdichtefunktion ist dabei insbesondere abhängig vom dem Mittelwert der Wahrscheinlichkeitsverteilung und der Standardabweichung der Wahrscheinlichkeitsverteilung.

Bevorzugt verwendet das Sensorsystem die Information über die Widerspruchsfreiheit für einen Systemtest oder eine Validierung, bei welcher anhand von Schwellwerten der Widerspruchsfreiheit festgestellt wird, ob das Sensorsystem hinreichend Fehlerfrei arbeitet oder nicht.

Alternativ vorzugsweise verwendet das Sensorsystem die Information über die Widerspruchsfreiheit für eine Überwachung des Betriebs des Sensorsystems.

Zur Bewertung und/oder Berechnung der relativen Konfidenz bzw. des relativen Konfidenzmaßes werden vorzugsweise die Übereinstimmung der Messungen sowie deren Unsicherheiten gegeneinander gewichtet. Daraus folgen die Anforderungen bzw. Randbedingungen an das Übereinstimmungsmaß bzw. relative Konfidenzmaß $K_r$, welche insbesondere wie folgt beschreiben bzw. definiert sind:

- Extremwerte: 0 bei vollständiger Divergenz, 1 bei der vollständigen Übereinstimmung der Messwerte.
- Unabhängigkeit von der Anzahl der verglichenen Messwerte und deren absoluter stochastischer Unsicherheit.
- Höhere relative Gewichtung von Messwerten mit kleiner Unsicherheit.
- Unabhängigkeit von den absoluten Messwerten / Arbeitspunkten, Abhängigkeit von den Differenzen der Messungen untereinander.
- Unabhängigkeit von der Art der Verteilungsfunktion (z.B. Normalverteilung, Gleichverteilung).

Diese zweckmäßigen Kriterien werden durch eine Gewichtung der zugehörigen Wahrscheinlichkeitsdichten miteinander durch Multiplikation und Integration der Ergebnisfunktion erfüllt. Die zugehörigen Dichten sind beispielsweise aus den Spezifikationen der Messdaten bekannt. Die relative Konfidenz bzw. das relative Konfidenzmaß bzw. das Relativ-Konfidenzmaß wird besonders bevorzugt messepochenweise ausgewertet und/oder berechnet, indem um die Messwerte $\mu_i$ die Wahrscheinlichkeitsdichten gelegt und diese punktweise miteinander multipliziert werden. Eine Normierung des Überdeckungsmaßes $K_r$ wird durch die Division durch das Ergebnis der gleichen Berechnung mit als ideal überdeckend angenommenen Werten erzielt. Dafür werden die Differenzen der $\mu_i$ = 0 gesetzt:

$$K_r = \frac{\int_{-\infty}^{+\infty} \prod_{i=1}^{i=n} p_i(x,\mu_i,\sigma_i)\cdot dx}{\int_{-\infty}^{+\infty} \prod_{i=1}^{i=n} p_i(x,0,\sigma_i)\cdot dx} \qquad \text{mit } 0 \leq K_r \leq 1 \;\; .$$

Dabei sind bevorzugt $n$ als die Anzahl der verglichenen Sensorinformationsquellkanäle, $p_i$ als die Wahrscheinlichkeitsdichtefunktion des $i$-ten Sensorinformationsquellkanals, und dabei insbesondere $\mu_i$ als der Mittelwert der Wahrscheinlichkeitsverteilung und $\sigma_i$ als Standardabweichung der Wahrscheinlichkeitsverteilung, definiert oder definierbar. Zur Bewertung des Streuungsmaßes werden vorzugsweise die Streubreiten der verfügbaren Signale miteinander verrechnet, um ein absolutes Maß für die mit dem verfügbaren Sensorsatz höchstens erreichbare Schärfe der Konfidenzprüfung zu erhalten, insbesondere als absolutes Konfidenzmaß bzw. Absolut-Konfidenzmaß. Daraus folgen bevorzugt die Anforderungen an das Streuungsmaß $K_a$:

- Abhängigkeit von der Anzahl der verfügbaren Signale - jede hinzukommende Datenquelle verbessert die Bewertung.
- Signale mit großer Unsicherheit haben geringen, Signale mit kleiner Unsicherheit haben großen Beitrag zur Verbesserung.
- Angabe des bestmöglichen Konfidenzniveaus, Unabhängigkeit von der tatsächlichen Überdeckung der Wahrscheinlichkeitsdichten.
- Unabhängigkeit von Arbeitspunkt und Messwerten.

Es ist bevorzugt, dass die Signalverarbeitungseinrichtung ein Fusionsfilter aufweist, welches im Zuge der gemeinsamen Auswertung zumindest der Sensorsignale und/oder daraus abgeleiteter Signale der Sensorelemente einen definierten Fusionsdatensatz bereitstellt, wobei dieser Fusionsdatensatz jeweils Daten zu definierten physikalischen Größen aufweist, wobei der Fusionsdatensatz zu wenigstens einer physikalischen Größe einen Wert dieser physikalischen Größe und eine Information über deren Datenqualität umfasst.

Unter Messdaten werden zweckmäßigerweise die Ausgangssignale bzw. - daten der Sensorelemente bzw. Sensorinformationsquellkanäle verstanden.

Das Fusionsfilter ist bevorzugt als Kalmanfilter ausgebildet, alternativ vorzugsweise als Partikelfilter, oder alternativ als Informationsfilter oder alternativ als "Unscented" Kalmanfilter.

Es ist bevorzugt, dass das Fusionsfilter so ausgebildet ist, dass der Fusionsdatensatz als Wert der wenigstens einen physikalischen Größe einen relativen Wert umfasst, insbesondere einen Offsetwert und/oder Änderungswert und/oder Korrekturwert und/oder Fehlerwert.

Es ist zweckmäßig, dass der die relativen Werte der jeweiligen physikalischen Größen des Fusionsdatensatzes Korrekturwerte sind, denen jeweils eine Streuungsinformation bzw. Streuung bzw. Streuungsmaß, insbesondere eine Varianz, als Information über deren Datenqualität zugeordnet sind.

Es ist bevorzugt, dass das Fusionsfilter so ausgebildet ist, dass der Wert wenigstens einer physikalischen Größe des Fusionsdatensatzes auf direkter oder indirekter Basis von Sensorsignalen mehrerer Sensorelemente berechnet wird, wobei diese Sensorelemente diese wenigstens eine physikalische Größe redundant in direkter oder indirekter Weise erfassen. Diese redundante Erfassung ist besonders bevorzugt direkte bzw. parallele Redundanz verwirklicht und/oder als analytische Redundanz verwirklicht, aus rechnerisch abgeleiteten bzw. hergeleiteten Größen/Werten und/oder Modellannahmen.

Das Fusionsfilter ist bevorzugt als Kalmanfilter ausgebildet, das iterativ wenigstens Prädiktionsschritte sowie Korrekturschritte durchführt und zumindest teilweise den Fusionsdatensatz bereitstellt. Insbesondere ist das Fusionsfilter als Error State Space Extended Sequential Kalman Filter ausgebildet, also als Kalman Filter, das besonders bevorzugt eine Linearisierung umfasst und in welchem Fehlerzustandsinformationen berechnet und/oder geschätzt werden und/oder welches sequentiell arbeitet und dabei die in dem jeweiligen Funktionsschritt der Sequenz verfügbaren Eingangsdaten verwendet/berücksichtigt.

Es ist zweckmäßig, dass das Sensorsystem eine Inertialsensoranordnung aufweist, umfassend wenigstens ein Beschleunigungssensorelement und zumindest ein Drehratensensorelement, und dass das Sensorsystem eine Strapdown-Algorithmus-Einheit umfasst, in welcher ein Strapdown-Algorithmus durchgeführt wird, mit dem wenigstens die Sensorsignale der Inertialsensoranordnung zu, insbesondere korrigierten, Navigationsdaten und/oder Fahrdynamikdaten verarbeitet werden, bezogen auf das Fahrzeug, in welchem das Sensorsystem angeordnet ist.

Es ist besonders bevorzugt, dass die Strapdown-Algorithmus-Einheit ihre berechneten Navigationsdaten und/oder Fahrdynamikdaten dem Fusionsfilter direkt oder indirekt bereitstellt.

Das Sensorsystem weist vorzugsweise eine Inertialsensoranordnung auf, welche so ausgebildet ist, dass sie zumindest die Beschleunigung entlang einer zweiten definierten Achse, insbesondere der Querachse des Fahrzeugs, und wenigstens die Drehrate um eine dritte definierte Achse, insbesondere der Hochsachse des Fahrzeugs, erfassen kann, wobei die erste und die dritte definierte Achse ein Erzeugendensystem bilden, und dabei insbesondere senkrecht zueinander ausgerichtet sind,
wobei das Sensorsystem außerdem mindestens ein Raddrehzahlsensorelement, insbesondere zumindest oder genau vier Raddrehzahlsensorelemente aufweist, welche die Raddrehzahl eines Rades oder die Raddrehzahlen jeweils eines der Räder des Fahrzeugs erfassen und insbesondere zusätzlich die Drehrichtung des zugeordneten Rades des Fahrzeugs erfasst, in dem das Sensorsystem angeordnet ist,
wobei das Sensorsystem zusätzlich wenigstens ein Lenkwinkelsensorelement umfasst, welches den Lenkwinkel des Fahrzeugs erfasst und
wobei das Sensorsystem darüber hinaus ein Satellitennavigationssystem umfasst, welches insbesondere so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt.

Besonders bevorzugt ist die Inertialsensoranordnung so ausgebildet, dass sie zumindest die Beschleunigungen entlang einer ersten, einer zweiten und einer dritten definierte Achse und wenigstens die Drehraten um diese erste, um diese zweite und um diese dritte definierte Achse erfassen kann, wobei diese erste, zweite und dritte definierte Achse ein Erzeugendensystem bilden, und dabei insbesondere jeweils senkrecht zueinander ausgerichtet sind.

Es ist bevorzugt, dass die Inertialsensoranordnung ihre Sensorsignale der Strapdown-Algorithmus-Einheit bereitstellt und die Strapdown-Algorithmus-Einheit so ausgebildet ist, dass sie zumindest
aus den Sensorsignalen der Inertialsensoranordnung sowie insbesondere wenigstens einer Fehlerzustandsinformation und/oder Varianz und/oder Information über die Datenqualität, die einem Sensorsignal oder einer physikalischen Größe zugeordnet ist und von dem Fusionsfilter bereitgestellt wird,
als Messgrößen und/oder Navigationsdaten und/oder Fahrdynamikdaten
mindestens korrigierte Beschleunigungen entlang der ersten, der zweiten und der dritten definierten Achse,
wenigstens korrigierte Drehraten um diese drei definierten Achsen,
wenigstens eine Geschwindigkeit bezüglich dieser drei definierten Achsen
sowie zumindest eine Positionsgröße
berechnet und/oder bereitstellt.

Es ist zweckmäßig, dass das Sensorsystem so ausgebildet ist, dass jeweils zumindest ein Sensorsignal und/oder eine physikalische Größe als direkte oder abgeleitete Größe der Inertialsensoranordnung und/oder der Strapdown-Algorithmus-Einheit,
der Raddrehzahlsensorelemente und des Lenkwinkelsensorelements, insbesondere indirekt über eine Fahrzeugmodelleinheit,
sowie des Satellitennavigationssystems, dabei insbesondere Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe,
dem Fusionsfilter bereitstellt und vom Fusionsfilter bei dessen Berechnungen berücksichtigt werden.

Es ist besonders bevorzugt, dass die Fahrzeugmodelleinheit so ausgebildet ist, dass aus den Sensorsignalen der Raddrehzahlsensorelemente und des Lenkwinkelsensorelements die Geschwindigkeit entlang der ersten definierten Achse, die Geschwindigkeit entlang der zweiten definierten Achse sowie die Drehrate um die dritte definierte Achse berechnet werden.

Es ist ganz besonders bevorzugt, dass die Fahrzeugmodelleinheit so ausgebildet ist, dass sie zur Berechnung ein Verfahren der kleinsten Fehlerquadrate zur Lösung eines überbestimmten Gleichungssystems, insbesondere als Least-Squared-Error-Verfahren bekannt, verwendet.

Es ist zweckmäßig, dass die Fahrzeugmodelleinheit so ausgebildet ist, dass sie bei ihrer Berechnung mindestens folgende physikalische Größen und/oder Parameter berücksichtigt

a) den Lenkwinkel jedes Rades, insbesondere durch den Lenkwinkelsensor für die beiden Vorderräder erfasst, wobei die Modellannahme getroffen wird, dass der Lenkwinkel der Hinterräder gleich Null ist oder dass der Lenkwinkel der Hinterräder zusätzlich erfasst wird,
b) die Raddrehzahl oder eine davon abhängige Größe jeden Rades,
c) die Drehrichtung jeden Rades,
d) der dynamische Halbmesser und/oder Raddurchmesser jeden Rades und

e) die Spurbreite jeder Achse des Fahrzeugs und/oder den Radstand zwischen den Achsen des Fahrzeugs.

Die Signalverarbeitungseinrichtung ist vorzugsweise so ausgebildet, dass das Fusionsfilter den Fusionsdatensatz zu definierten Zeitpunkten berechnet und/oder bereitstellt und/oder ausgibt.

Das Fusionsfilter ist bevorzugt so ausgebildet, dass es den Fusionsdatensatz unabhängig von den Abtastraten und/oder Sensorsignalausgabezeitpunkten der Sensorelemente, insbesondere der Raddrehzahlsensorelemente und des Lenkwinkelsensorelements, und unabhängig von zeitlichen Signal- oder Messgrößen-/ oder Informationsausgabezeitpunkten des Satellitennavigationssystems, berechnet und/oder bereitstellt und/oder ausgibt.

Es ist zweckmäßig, dass die Signalverarbeitungseinrichtung so ausgebildet ist, dass im Zuge eines Funktionsschritts des Fusionsfilters stets, insbesondere asynchron, die neuesten, dem Fusionsfilter verfügbaren Informationen und/oder Signale und/oder Daten der Sensorelemente, insbesondere der Raddrehzahlsensorelemente und des Lenkwinkelsensorelements, direkt oder indirekt, insbesondere mittels der Fahrzeugmodelleinheit und des Satellitennavigationssystems direkt oder indirekt, sequenziell aktualisiert und/oder in das Fusionsfilter aufgenommen werden und bei der Berechnung des zugeordneten Funktionsschritts des Fusionsfilters berücksichtigt werden.

Die Erfindung bezieht sich außerdem auf die Verwendung des Sensorsystems in Fahrzeugen, insbesondere Kraftfahrzeugen, besonders bevorzugt in Automobilen.

Die Erfindung bezieht sich zusätzlich insbesondere auf ein Verfahren, welches in dem Sensorsystem abgearbeitet bzw. durchgeführt wird und durch die obigen Ausgestaltungenoptionen -/möglichkeiten des Sensorsystems hinsichtlich der möglichen Verfahrensvarianten offenbart ist.

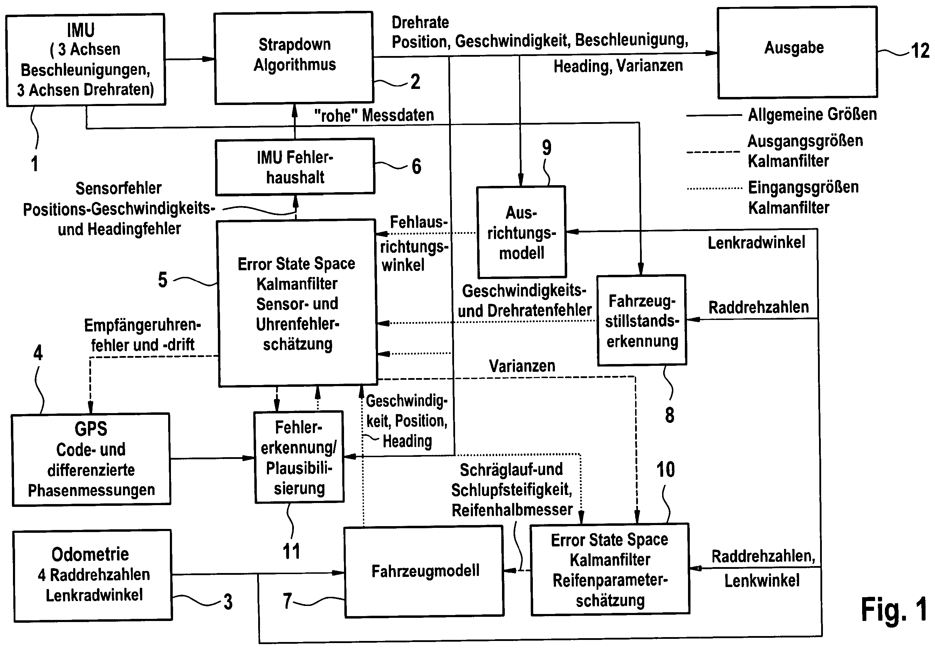

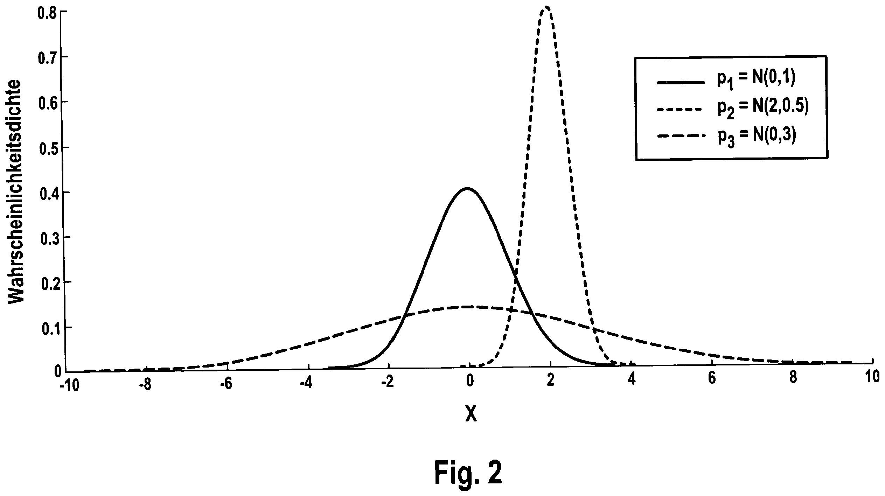

Weitere bevorzugte Ausführungsformen ergeben sich aus den Unteransprüchen und der nachfolgenden Beschreibung eines Ausführungsbeispiels an Hand von Fig. 1. Außerdem dient Fig.2 zur beispielhaften Erläuterung zur Berechnung von Konfidenzmaßen.

Fig. 1 zeigt in schematischer Darstellung ein Ausführungsbeispiel des Sensorsystems, das zur Anordnung und Verwendung in einem Fahrzeug vorgesehen ist. Dabei sind die Sensorelemente und das Satellitennavigationssystem sowie die wichtigsten Signalverarbeitungseinheiten der Signalverarbeitungseinrichtung als Funktionsblöcke veranschaulicht und deren Zusammenwirken untereinander.

Das Sensorsystem umfasst eine Inertialsensoranordnung 1, IMU, "inertial measurement unit", die so ausgebildet ist, dass sie zumindest die Beschleunigungen entlang einer ersten, einer zweiten und einer dritten definierte Achse und wenigstens die Drehraten um diese erste, um diese zweite und um die dritte definierte Achse erfassen kann, wobei die erste definierte Achse der Längsachse des Fahrzeugs entspricht, die zweite definierte Achse der Querachse des Fahrzeugs entspricht und die dritte definierte Achse der Hochachse des Fahrzeugs entspricht. Diese drei Achsen bilden ein kartesisches Koordinatensystem, das Fahrzeugkoordinatensystem.

Das Sensorsystem weist eine Strapdown-Algorithmus-Einheit 2 auf, in welcher ein Strapdown-Algorithmus durchgeführt wird, mit dem wenigstens die Sensorsignale der Inertialsensoranordnung 1 zu korrigierten, Navigationsdaten und/oder Fahrdynamikdaten verarbeitet werden. Diese Ausgangsdaten der Strapdown-Algorithmus-Einheit 2 umfassen die Daten folgender physikalischer Größen: die Geschwindigkeit, die Beschleunigung sowie die Drehrate jeweils des Fahrzeugs, beispielhaft bezüglich der drei Achsen des Fahrzeugkoordinatensystems und beispielgemäß zusätzlich jeweils bezogen auf ein Weltkoordinatensystem, das zur Beschreibung der Ausrichtung und/oder von dynamischen Größen des Fahrzeugs auf der Welt geeignet ist. Außerdem umfassen die Ausgangsdaten der Strapdown-Algorithmus-Einheit 2 die Position bezüglich des Fahrzeugkoordinatensystems und die Ausrichtung hinsichtlich des Weltkoordinatensystems. Zusätzlich weisen die Ausgangsdaten der Strapdown-Algorithmus-Einheit die Varianzen als Information über die Datenqualität der obig genannten physikalischen Größen auf, zumindest einiger davon. Diese Varianzen werden beispielgemäß nicht in der Strapdown-Algorithmus-Einheit berechnet, sondern nur von dieser verwendet und weitergeleitet.

Die Ausgangsdaten der Strapdown-Algorithmus-Einheit sind beispielhaft außerdem die Ausgangsdaten bzw. -signale bzw. Ausgabedaten 12 des gesamten Sensorsystems.

Das Sensorsystem umfasst außerdem Raddrehzahlsensorelemente 3 für jedes Rad des Fahrzeugs, beispielgemäß vier, welche die Raddrehzahlen jeweils eines der Räder des Fahrzeugs erfassen und jeweils zusätzlich die Drehrichtung erfassen, und zusätzlich ein Lenkwinkelsensorelement 3, das den Lenkwinkel des Fahrzeugs erfasst. Die Raddrehzahlsensorelement und das Lenkwinkelsensorelement bilden eine Sensoranordnung 3 zur Erfassung der Odometrie.

Darüber hinaus weist das Sensorsystem ein Satellitennavigationssystem 4 auf, welches so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt. Zusätzlich stellt das Satellitennavigationssystem 4 beispielgemäß dem Fusionsfilter eine Startposition bzw. Startpositionsinformation bereit, zumindest zum Start oder Einschalten des Sensorsystems.

Die Signalverarbeitungseinrichtung des Sensorsystems umfasst außerdem ein Fusionsfilter 5. Das Fusionsfilter 5 stellt im Zuge der gemeinsamen Auswertung zumindest der Sensorsignale und/oder daraus abgeleiteter Signale der Sensorelemente 3, also der Odometrie, und der Ausgangssignale des Satellitennavigationssystems 4 und/oder daraus abgeleiteter Signale einen definierten Fusionsdatensatz 6 bereit. Dieser Fusionsdatensatz weist jeweils Daten zu definierten physikalischen Größen auf, wobei der Fusionsdatensatz 6 zu wenigstens einer physikalischen Größe einen Wert dieser physikalischen Größe und eine Information über deren Datenqualität umfasst, wobei diese Information über die Datenqualität beispielgemäß als Varianz ausgeprägt ist.

Der Fusionsdatensatz 6 umfasst als Wert der wenigstens einen physikalischen Größe einen relativen Wert, beispielhaft einen Korrekturwert, auch Offsetwert genannt. Beispielgemäß ergibt sich der Korrekturwert jeweils aus den kumulierten Fehlerwerten bzw. Änderungswerten, die vom Fusionsfilter 5 bereitgestellt werden.

Die relativen Werte der jeweiligen physikalischen Größen des Fusionsdatensatzes 6 sind also beispielgemäß Korrekturwerte und Varianzen. Der Fusionsdatensatz 6 berechnet beispielgemäß, anders formuliert, einen Fehlerhaushalt, welcher als Eingangsgröße bzw. Eingangsdatensatz der Strapdown-Algorithmus-Einheit bereitgestellt wird und von dieser bei ihren Berechnungen zumindest teilweise berücksichtigt wird. Dieser Fehlerhaushalt umfasst als Datensatz bzw. Ausgangsdaten zumindest Korrekturwerte bzw. Fehlerwerte physikalischer Größen sowie jeweils eine Varianz, als Information über die Datenqualität, zu jedem Wert. Hierbei werden vom Fusionsfilter zumindest die Korrekturwerte und Varianzen zu den physikalischen Größen Geschwindigkeit, Beschleunigung und Drehrate, jeweils bezogen auf das Fahrzeugkoordinatensystem, also jeweils die drei Komponenten dieser Größen bezüglich dieses Koordinatensystems, sowie IMU-Ausrichtung bzw. der IMU-Ausrichtungswinkel zwischen Fahrzeugkoordinatensystem und dem Koordinatensystem bzw. der Einbauausrichtung der Inertialsensoranordnung 1 sowie die Position bezogen auf das Weltkoordinatensystem an die Strapdown-Algorithmus-Einheit übertragen.

Die Werte der physikalischen Größen des Fusionsdatensatzes werden auf direkter bzw. indirekter Basis der Sensorsignale der Sensorelemente 3 und des Satellitennavigationssystems 4 berechnet, wobei wenigstens einige Größen, beispielsweise die Geschwindigkeit und die Position des Fahrzeugs bezüglich der Fahrzeugkoordinaten redundant zu den Daten der Strapdown-Algorithmus-Einheit 2 erfasst werden und verwertet werden.

Das Fusionsfilter 5 ist als beispielgemäß als Error State Space Extended Sequential Kalman Filter ausgebildet ist, also als Kalman Filter, das insbesondere eine Linearisierung umfasst und in welchem die Korrekturwerte berechnet und/oder geschätzt werden und welches sequentiell arbeitet und dabei die in dem jeweiligen Funktionsschritt der Sequenz verfügbaren Eingangsdaten verwendet/berücksichtigt.

Das Fusionsfilter 5 ist so ausgebildet, dass im Zuge eines Funktionsschritts des Fusionsfilters stets, asynchron, die neuesten, dem Fusionsfilter verfügbaren Informationen und/oder Signale und/oder Daten der Sensorelemente 3, also der Raddrehzahlsensorelemente und des Lenkwinkelsensorelements indirekt mittels einer Fahrzeugmodelleinheit 7 und des Satellitennavigationssystems 4 direkt oder indirekt, sequenziell aktualisiert und/oder in das Fusionsfilter aufgenommen werden und bei der Berechnung des zugeordneten Funktionsschritts des Fusionsfilters 5 berücksichtigt werden.

Die Fahrzeugmodelleinheit 7 ist so ausgebildet, dass sie aus den Sensorsignalen der Raddrehzahlsensorelemente 3 und des Lenkwinkelsensorelements 3 zumindest die Geschwindigkeit entlang einer ersten definierten Achse, die Geschwindigkeit entlang einer zweiten definierten Achse sowie die Drehrate um eine dritte definierte Achse berechnet und dem Fusionsfilter 5 bereitstellt.

Das Sensorsystem weist beispielgemäß vier Raddrehzahlsensorelemente 3 auf, wobei jeweils eins der Raddrehzahlsensorelemente jedem Rad des Fahrzeugs zugeordnet ist, wobei die Fahrzeugmodelleinheit 7 so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das Lenkwinkelsensorelement für die Vorderräder und mittels wenigstens eines weiteren Lenkwinkelsensorelements für die Hinterräder oder zumindest aus einer Modellannahme für die Hinterräder, die Geschwindigkeitskompenenten und/oder die Geschwindigkeit, jedes Rades, entlang/bezüglich der ersten und der zweiten definierten Achse direkt oder indirekt berechnet, wobei aus diesen acht Geschwindigkeitskomponenten und/oder den vier Geschwindigkeiten jeweils bezüglich der ersten und zweiten definierten Achse, die Geschwindigkeit entlang einer ersten definierten Achse, die Geschwindigkeit entlang einer zweiten definierten Achse sowie die Drehrate um eine dritte definierte Achse berechnet wird.

Das Sensorsystem bzw. dessen Signalverarbeitungseinrichtung umfasst außerdem eine Reifenparameterschätzungseinheit 10, welche so ausgebildet ist, dass sie zumindest den Halbmesser, beispielgemäß den dynamischen Halbmesser, jeden Rades berechnet und zusätzlich die Schräglaufsteifigkeit und die Schlupfsteifigkeit jeden Rades berechnet und der Fahrzeugmodelleinheit 7 als zusätzliche Eingangsgrößen bereitstellt, wobei die Reifenparameterschätzungseinheit 10 so ausgebildet ist, dass sie ein im Wesentlichen lineares Reifenmodell zur Berechnung der Rad-/Reifengrößen verwendet. Die beispielgemäßen Eingangsgrößen der Reifenparameterschätzungseinheit sind dabei die Raddrehzahlen 3 und der Lenkwinkel 3, zumindest teilweise oder vollständig die Ausgangsgrößen bzw. -werte der Strapdown-Algorithmus-Einheit 2, insbesondere die von ihr bereitgestellten Varianzen zusätzlich zu den Werten der physikalischen Größen, sowie die Varianzen des Fusionsfilters 5, zu den physikalischen Größen, welche die Eingangsgrößen der Reifenparameterschätzungseinheit 10 sind.

Das Sensorsystem bzw. dessen Signalverarbeitungseinrichtung umfasst außerdem eine GPS-Fehlererkennungs-und-Plausibilisierungseinheit 11, welche so ausgebildet ist, dass sie beispielgemäß als Eingangsdaten die Ausgangsdaten bzw. Ausgangssignale des Satellitennavigationssystem 4 sowie zumindest teilweise die Ausgangsdaten bzw. Ausgangssignale der Strapdown-Algorithmus-Einheit 2 erhält und in ihren Berechnungen berücksichtigt

Dabei ist die GPS-Fehlererkennungs-und-Plausibilisierungseinheit 11 zusätzlich mit dem Fusionsfilter 5 verbunden und tauscht mit diesem Daten aus.

Die GPS-Fehlererkennungs-und-Plausibilisierungseinheit 11 ist beispielhaft so ausgebildet, dass sie folgendes Verfahren durchführt:
Verfahren zum Auswählen eines Satelliten, umfassend:

- Messen von Messlagedaten des Fahrzeuges gegenüber dem Satelliten basierend auf dem GNSS-Signal, also dem Globalen Navigationssatellitensystem-Signal, dem Ausgangssignal bzw. den Ausgangsdaten des Satellitennavigationssystems 4,
- Bestimmen von zu den basierend auf dem GNSS-Signal bestimmten Messlagedaten redundanten Referenzlagedaten des Fahrzeuges; und
- Auswählen des Satelliten, wenn eine Gegenüberstellung der Messlagedaten und der Referenzlagedaten einer vorbestimmten Bedingung genügt,
- wobei zur Gegenüberstellung der Messlagedaten und der Referenzlagedaten eine Differenz zwischen den Messlagedaten und den Referenzlagedaten gebildet wird,
- wobei die vorbestimmte Bedingung ein maximal zulässiger Fehler zwischen den Messlagedaten und den Referenzlagedaten ist,
- wobei der maximal zulässige Fehler von einer Standardabweichung abhängig ist, die basierend auf einer Summe aus einer Referenzvarianz für die Referenzlagedaten und einer Messvarianz für die Messlagedaten berechnet wird,
- wobei der maximal zulässige Fehler einem Vielfachen der Standardabweichung derart entspricht, dass eine Wahrscheinlichkeit, dass die Messlagedaten in ein von der Standardabweichung abhängiges Streuintervall einen vorbestimmten Schwellwert unterschreiten.

Das Sensorsystem bzw. dessen Signalverarbeitungseinrichtung weist außerdem eine Stillstandserkennungseinheit 8 auf, welche so ausgebildet ist, dass sie einen Stillstand des Fahrzeugs erkennen kann und im Fall eines erkannten Stillstands des Fahrzeugs zumindest dem Fusionsfilter 5 Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen. Die Stillstandserkennungseinheit 8 ist dabei beispielgemäß so ausgebildet, dass sie als Eingangsdaten die Raddrehzahlen bzw. Raddrehzahlsignale nutzt sowie die "rohen" bzw. direkten Ausgangssignale der Inertialsensoranordnung 1.

Die Signalverarbeitungseinrichtung berechnet und/oder verwendet beispielgemäß eine erste Gruppe von Daten physikalischer Größen, deren Werte sich auf ein Fahrzeugkoordinatensystem beziehen und zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit 9 aufweist, mit welcher der Ausrichtungswinkel zwischen dem Fahrzeugkoordinatensystem und dem Weltkoordinatensystem berechnet wird.

Der Ausrichtungswinkel zwischen dem Fahrzeugkoordinatensystem und dem Weltkoordinatensystem in der Ausrichtungsmodelleinheit 9 wird berechnet zumindest auf Basis folgender Größen:
die Geschwindigkeit bezüglich des Fahrzeugkoordinatensystems, die Geschwindigkeit bezüglich des Weltkoordinatensystems und den Lenkwinkel.

Der Ausrichtungswinkel zwischen dem Fahrzeugkoordinatensystem und dem Weltkoordinatensystem wird beispielgemäß in der Ausrichtungsmodelleinheit 9 zusätzlich zumindest auf Basis einer oder mehrerer der folgenden Größen berechnet:

eine Ausrichtungsinformation des Fahrzeugs bezogen auf das Weltkoordinatensystem,
einige oder sämtliche der Korrekturwerte und/oder Varianzen des Fusionsfilters und/oder
die Beschleunigung des Fahrzeugs bezogen auf das Fahrzeugkoordinatensystem und/oder das Weltkoordinatensystem.

Die Ausrichtungsmodelleinheit 9 verwendet einige oder sämtliche der Ausgangsdaten und/oder Ausgangssignale der Strapdown-Algorithmus-Einheit 2 zur Berechnung.

Die Ausrichtungsmodelleinheit 9 ist beispielgemäß so ausgebildet, dass sie zusätzlich zu dem Ausrichtungswinkel noch eine Information über die Datenqualität dieser Größe berechnet und bereitstellt, insbesondere die Varianz des Ausrichtungswinkels, wobei die Ausrichtungsmodelleinheit 9 den Ausrichtungswinkel zwischen dem Fahrzeugkoordinatensystem und dem Weltkoordinatensystem sowie die Information über die Datenqualität dieser Größe dem Fusionsfilter 5 bereitstellt und der Fusionsfilter diesen Ausrichtungswinkel bei seinen Berechnungen verwendet und besonders bevorzugt die die Information über die Datenqualität dieser Größe, insbesondere die Varianz des Ausrichtungswinkels, an die Strapdown-Algorithmus-Einheit 2 weiterleitet.

Die Signalverarbeitungseinrichtung des Sensorsystems ist dabei beispielgemäß so ausgebildet, dass sie eine Information über die Widerspruchsfreiheit zumindest eines Datums einer physikalischen Größe bereitstellt, wobei dieses Datum der physikalischen Größe zumindest teilweise auf Basis der Sensorsignale von Sensorelementen berechnet wird, welche diese physikalische Größe direkt erfassen oder aus deren Sensorsignalen diese physikalische Größe berechenbar ist, wobei die Information über die Widerspruchsfreiheit dieses Datum dieser physikalischen Größe wenigstens auf Basis der direkt oder indirekt redundant vorliegenden Sensorinformationen berechnet wird.

Die Signalverarbeitungseinheit ist beispielgemäß dabei so ausgebildet, dass sie zu den Werten sämtlicher physikalischer Größen des Fusionsdatensatzes ein Relativ-Konfidenzmaß und außerdem ein Absolut-Konfidenzmaß berechnet und bereitstellt.

In Fig. 2 sind schematisch drei beispielhafte Wahrscheinlichkeitsdichten dargestellt. Der Erwartungswert entspricht dabei dem gemessenen Wert des entsprechenden Sensors bzw. Sensorelements in der betrachteten Messepoche, die um diesen Messwert gelegte Streuung entspricht der spezifizierten Unsicherheit des zugehörigen Sensors. Die Werte sind beispielgemäß normalverteilt mit:

$$p_1 = \mathcal{N}(0,1)$$ repräsentativ für einen Sensor mit mittlerer Unsicherheit

$$p_2 = \mathcal{N}(2,0.5)$$ repräsentativ für einen Sensor mit niedriger Unsicherheit und Abweichung des Messwertes von den anderen Sensoren

$$p_3 = \mathcal{N}(0,3)$$ repräsentativ für einen Sensor mit hoher Unsicherheit und ohne Versatz zu $p_1$.

Die Ergebnisse der Konfidenzberechnungen verschiedener Verteilungen sind beispielhaft in Tabelle 1 angegeben.

Im Vergleich 1 ist erkennbar, dass durch die Berücksichtigung zweier Messungen mit unterschiedlicher Unsicherheit durch die Übereinstimmung der Mittelwerte das Übereinstimmungsmaß maximal wird, während das Streuungsmaß aufgrund der hohen Unsicherheit von $p_3$ sich nur wenig von der Unsicherheit von $p_1$ unterscheidet. In Vergleich 2 ist eine Abnahme von $K_r$ erkennbar, da durch den Versatz der Mittelwerte ein Widerspruch zwischen $p_1$ und $p_2$ besteht. In Vergleich 3 ist diese Abnahme trotz des gleichen Versatzes wie bei Vergleich 2 deutlich geringer, da $p_3$ eine höhere Unsicherheit als $p_2$ besitzt. In Vergleich 4 wird durch die Verwendung von drei Wahrscheinlichkeitsdichten die Abweichung von $p_2$ deutlicher erkennbar; dies resultiert in einer Abnahme von $K_r$. Weiterhin ist zu erkennen, dass das Streuungsmaß $K_a$ in den Vergleichen 2 bis 4 maßgeblich von der niedrigen Unsicherheit von $p_2$ beeinflusst wird.

Tabelle 1

| Nr. | Verglichene Wahrscheinlichkeitsdichten | Übereinstimmungmaß $K_r$ | Streuungsmaß $K_a$ |
|---|---|---|---|
| 1 | $p_1 \cdot p_3$ | 1.0000 | 0.9487 |
| 2 | $p_1 \cdot p_2$ | 0.2019 | 0.4472 |
| 3 | $p_2 \cdot p_3$ | 0.8056 | 0.4932 |
| 4 | $p_1 \cdot p_2 \cdot p_3$ | 0.1757 | 0.4423 |

**Patentansprüche**

1. Sensorsystem, umfassend mehrere Sensorelemente, die so ausgebildet sind, dass sie zumindest teilweise unterschiedliche primäre Messgrößen erfassen und/oder zumindest teilweise unterschiedliche Messprinzipien nutzen, des Weiteren umfassend eine Signalverarbeitungseinrichtung, wobei
die Signalverarbeitungseinrichtung einen Fusionsfilter (5) aufweist, welches so ausgebildet ist, dass es die Sensorsignale der Sensorelemente zumindest teilweise gemeinsam auswertet und die Informationsqualität der Sensorsignale bewertet sowie wenigstens ein Datum einer physikalischen Größe, insbesondere zumindest teilweise, auf Basis der Sensorsignale von Sensorelementen berechnet, welche diese physikalische Größe direkt erfassen oder aus deren Sensorsignalen diese physikalische Größe berechenbar ist,
**dadurch gekennzeichnet, dass**
die Signalverarbeitungseinrichtung eine Integritätseinheit umfasst, die so ausgebildet ist, dass sie eine Information über die Widerspruchsfreiheit des wenigstens einen Datums der physikalischen Größe bereitstellt, wobei die Information über die Widerspruchsfreiheit dieses Datums dieser physikalischen Größe wenigstens auf Basis der direkt oder indirekt redundant vorliegenden Sensorinformationen berechnet wird, wobei die Integritätseinheit als Information über die Widerspruchsfreiheit zu dem wenigstens einen Datum der physikalischen Größe ein Relativ-Konfidenzmaß als relative Konfidenzinformation bereitstellt, welche abhängig ist von der relativen Abweichung der Daten und/oder Messwerte wenigstens zweier Sensorinformationsquellkanäle auf deren Basis das entsprechende wenigstens eine Datum der physikalischen Größe berechnet wird.

2. Sensorsystem nach Anspruch 1, **dadurch gekennzeichnet, dass** die Signalverarbeitungseinrichtung ein Fusionsfilter (5) aufweist, welches im Zuge der gemeinsamen Auswertung zumindest der Sensorsignale und/oder daraus abgeleiteter Signale der Sensorelemente einen definierten Fusionsdatensatz (6) bereitstellt, wobei dieser Fusionsdatensatz jeweils Daten zu definierten physikalischen Größen aufweist, wobei der Fusionsdatensatz (6) zu wenigstens einer physikalischen Größe ein Datum dieser physikalischen Größe und eine Information über die Widerspruchsfreiheit dieses Datums der physikalischen Größe umfasst.

3. Sensorsystem nach mindestens einem der Ansprüche 1 oder 2, **dadurch gekennzeichnet, dass** die Signalverarbeitungseinrichtung so ausgebildet ist, dass der definierte Fusionsdatensatz zusätzlich zumindest ein Statusdatum eines Sensorelements aufweist, welches das Sensorelement mittels einer Eigendiagnose selbst bereitstellt, wobei dieses Statusdatum bei der Berechnung der Information über die Widerspruchsfreiheit zumindest eines Datums einer physikalischen Größe berücksichtigt wird.

4. Sensorsystem nach wenigstens einem der Ansprüche 1 bis 3, **dadurch gekennzeichnet, dass** die Signalverarbeitungseinrichtung so ausgebildet ist, dass sie pro Sensorinformationsquellkanal jeweils einen Messwert und/oder eine Messinformation und/oder eine aus einer Messinformation abgeleiteten Wert sowie ein Unsicherheitsmaß dieses Sensorinformationsquellkanals zur Berechnung der relativen Konfidenzinformation verwendet.

5. Sensorsystem nach wenigstens einem der Ansprüche 1 bis 4, **dadurch gekennzeichnet, dass** die Signalverarbeitungseinrichtung so ausgebildet ist, dass für das wenigstens eine Datum einer physikalischen Größe die zugeordnete relative Konfidenzinformation berechnet wird als das relative Konfidenzmaß $K_r$ mit

$$K_r = \frac{\int_{-\infty}^{+\infty} \prod_{i=1}^{i=n} p_i(x, \mu_i, \sigma_i) \cdot dx}{\int_{-\infty}^{+\infty} \prod_{i=1}^{i=n} p_i(x, 0, \sigma_i) \cdot dx} \qquad , \text{wobei} \quad 0 \leq K_r \leq 1$$

und wobei $n$ als die Anzahl der verglichenen Sensorinformationsquellkanäle,
$p_i$ als die Wahrscheinlichkeitsdichtefunktion des $i$-ten Sensorinformationsquellkanals, und dabei insbesondere $\mu_i$ als der Mittelwert der Wahrscheinlichkeitsverteilung und $\sigma_i$ als Standardabweichung der Wahrscheinlichkeitsverteilung, und x als Integrationsvariable, definiert oder definierbar sind.

6. Sensorsystem nach mindestens einem der Ansprüche 1 bis 5, **dadurch gekennzeichnet, dass** die Signalverarbeitungseinrichtung so ausgebildet ist, dass sie zusätzlich zu einem Relativ-Konfidenzmaß als Information über die Widerspruchsfreiheit zu wenigstens einem Datum einer physikalischen Größe ein Absolut-Konfidenzmaß als absolute Konfidenzinformation bereitstellt, welche abhängig ist von einem Unsicherheitsmaß wenigstens zweier Sensorinformationsquellkanäle auf deren Basis das entsprechende wenigstens eine Datum der physikalischen Größe berechnet wird.

7. Sensorsystem nach Anspruch 6, **dadurch gekennzeichnet, dass** die Signalverarbeitungseinrichtung so ausgebildet ist, dass für das wenigstens eine Datum einer physikalischen Größe die zugeordnete absolute Konfidenzinformation berechnet wird als das absolute Konfidenzmaß $K_a$ mit $K_a = \left[ \sum_{i=1}^{i=n} \sigma_i^{-2} \right]^{-\frac{1}{2}}$ oder $K_a = \sqrt{\sum_{i=1}^{i=n} \sigma_i^2}$

und dabei mit $n$ als der Anzahl der verglichenen Sensorinformationsquellkanäle und $\sigma_i$ als die Standardabweichung

des *i*-ten Sensorinformationsquellkanals.

8. Sensorsystem nach mindestens einem der Ansprüche 1 bis 7, **dadurch gekennzeichnet, dass** die Signalverarbeitungseinrichtung so ausgebildet ist, dass zu wenigstens einem Datum einer physikalischen Größe eine Bewertung durchgeführt wird, ob die Wiederspruchsfreiheit hinreichend groß ist oder nicht, wobei diese Bewertung durchgeführt wird, indem berechnet wird, ob die relative Konfidenzinformation und/oder das relative Konfidenzmaß einen definierten Schwellwert überschreitet.

9. Sensorsystem nach mindestens einem der Ansprüche 1 bis 8, **dadurch gekennzeichnet, dass** ein Wegfall eines Sensorinformationsquellkanals berücksichtigt wird bei der Berechnung der Information über die Widerspruchsfreiheit.

10. Sensorsystem nach Anspruch 9, **dadurch gekennzeichnet, dass** die Signalverarbeitungseinrichtung so ausgebildet ist, dass im Fall, dass in einem definierten Zeitintervall, in welchem die Daten wenigstens eines Sensorinformationsquellkanals zur Berechnung der Information über die Widerspruchsfreiheit genutzt werden, nur noch ein einziger Sensorinformationsquellkanal verfügbar ist und/oder nur ein einziger Sensorinformationskanal ein Datum bereitstellt, kein relatives Konfidenzmaß berechnet wird und dass in diesem Fall für das absolute Konfidenzmaß der Wert 0 oder ein Wert gegen unendlich oder ein definierter Wert angenommen wird oder dass das absolute Konfidenzmaß in diesem Fall nicht berechnet wird.

**Claims**

1. Sensor system, comprising a plurality of sensor elements that are in a form such that they sense at least to some extent different primary measured variables and/or use at least to some extent different measurement principles, furthermore comprising a signal processing device, wherein
the signal processing device has a fusion filter (5) which is in a form such that it evaluates the sensor signals from the sensor elements at least to some extent collectively and rates the information quality of the sensor signals and also calculates at least one datum of a physical variable, particularly at least to some extent, on the basis of the sensor signals from sensor elements that sense this physical variable directly or from the sensor signals from which it is possible to calculate this physical variable,
**characterized in that**
the signal processing device comprises an integrity unit which is in a form such that it provides a piece of information about the consistency of the at least one datum of the physical variable, wherein the information about the consistency of this datum of this physical variable is calculated at least on the basis of the directly or indirectly redundantly present sensor information, wherein the integrity unit provides a relative confidence measure as relative confidence information, which is dependent on the relative deviation in the data and/or measured values from at least two sensor information source channels on the basis of which the relevant at least one datum of the physical variable is calculated, as information about the consistency for the at least one datum of the physical variable.

2. Sensor system according to Claim 1, **characterized in that** the signal processing device has a fusion filter (5) that provides a defined fusion data record (6) in the course of the collective evaluation of at least the sensor signals and/or signals derived therefrom from the sensor elements, wherein this fusion data record has in each case data for defined physical variables, wherein the fusion data record (6) comprises, for at least one physical variable, a datum of this physical variable and a piece of information about the consistency of this datum of the physical variable.

3. Sensor system according to at least one of Claims 1 and 2, **characterized in that** the signal processing device is in a form such that the defined fusion data record additionally has at least one status datum of a sensor element, which the sensor element provides itself by means of self-diagnosis, wherein this status datum is taken into account during the calculation of the information about the consistency of at least one datum of a physical variable.

4. Sensor system according to at least one of Claims 1 to 3, **characterized in that** the signal processing device is in a form such that it uses a measured value and/or a piece of measurement information and/or a value derived from a piece of measurement information and also an uncertainty measure for this sensor information source channel, respectively, per sensor information source channel in order to calculate the relative confidence information.

5. Sensor system according to at least one of Claims 1 to 4, **characterized in that** the signal processing device is in a form such that for the at least one datum of a physical variable the associated relative confidence information is calculated as the relative confidence measure $K_r$ with

$$K_r = \frac{\int_{-\infty}^{+\infty} \prod_{i=1}^{i=n} p_i(x, \mu_i, \sigma_i) \cdot dx}{\int_{-\infty}^{+\infty} \prod_{i=1}^{i=n} p_i(x, 0, \sigma_i) \cdot dx} \qquad , \text{where } 0 \leq K_r \leq 1$$

and where $n$ is defined or definable as the number of compared sensor information source channels, $p_i$ is defined or definable as the probability density function of the i-th sensor information source channel, and in this case particularly $\mu_i$ is defined or definable as the mean value of the probability distribution and $\sigma_i$ is defined or definable as the standard deviation of the probability distribution, and x is defined or definable as the integration variable.

6. Sensor system according to at least one of Claims 1 to 5, **characterized in that** the signal processing device is in a form such that, in addition to a relative confidence measure, it provides an absolute confidence measure as absolute confidence information, which is dependent on an uncertainty measure for at least two sensor information source channels on the basis of which the relevant at least one datum of the physical variable is calculated, as information about the consistency for at least one datum of a physical variable.

7. Sensor system according to Claim 6, **characterized in that** the signal processing device is in a form such that for the at least one datum of a physical variable the associated absolute confidence information is calculated as the absolute confidence measure $K_a$ with $K_a = \left[ \sum_{i=1}^{i=n} \sigma_i^{-2} \right]^{-\frac{1}{2}}$ or $K_a = \sqrt{\sum_{i=1}^{i=n} \sigma_i^2}$ and in this case with $n$ as the number of compared sensor information source channels and $\sigma_i$ as the standard deviation of the i-th sensor information source channel.

8. Sensor system according to at least one of Claims 1 to 7, **characterized in that** the signal processing device is in a form such that for at least one datum of a physical variable a rating is performed to determine whether or not the consistency is sufficiently great, wherein this rating is performed by calculating whether the relative confidence information and/or the relative confidence measure exceeds a defined threshold value.

9. Sensor system according to at least one of Claims 1 to 8, **characterized in that** a disappearance of a sensor information source channel is taken into account during the calculation of the information about the consistency.

10. Sensor system according to Claim 9, **characterized in that** the signal processing device is in a form such that, in the event of only a single sensor information source channel being available and/or only a single sensor information channel providing a datum in a defined time interval in which the data from at least one sensor information source channel are used for calculating the information about the consistency, no relative confidence measure is calculated and that in this case the value 0 or a value close to infinity or a defined value is assumed for the absolute confidence measure or that the absolute confidence measure is not calculated in this case.

**Revendications**

1. Système de détection comprenant une pluralité d'éléments de détection conçus pour détecter au moins partiellement différentes grandeurs de mesure primaires et/ou pour utiliser au moins partiellement différents principes de mesure, comprenant en outre un dispositif de traitement de signaux, dans lequel
le dispositif de traitement de signaux comporte un filtre de fusion (5) qui est conçu pour évaluer de manière au moins partiellement commune les signaux de détection des éléments de détection, pour analyser la qualité des informations des signaux de détection et pour calculer au moins une donnée d'une grandeur physique, en particulier au moins partiellement sur la base des signaux de détection d'éléments de détection qui détectent directement ladite grandeur physique ou dont les signaux de détection permettent de calculer la grandeur physique,
**caractérisé en ce que** le dispositif de traitement de signaux comprend une unité d'intégrité conçue pour fournir une information concernant la cohérence de l'au moins une donnée de la grandeur physique, dans lequel l'information concernant la cohérence de ladite donnée de ladite grandeur physique est calculée au moins sur la base des informations de détection disponibles de manière directement ou indirectement redondante, dans lequel l'unité d'intégrité fournit, en tant qu'information concernant la cohérence de l'au moins une donnée de la grandeur physique, une mesure de confiance relative, en tant qu'information de confiance relative, qui dépend de l'écart relatif des données et/ou de valeurs de mesure d'au moins deux canaux de sources d'informations de détection sur la base desquelles l'au moins une donnée correspondante de la grandeur physique est calculée.

2. Système de détection selon la revendication 1, **caractérisé en ce que** le dispositif de traitement de signaux comporte un filtre de fusion (5) qui fournit un ensemble de données de fusion (6) défini au cours de l'évaluation commune d'au moins les signaux de détection et/ou de signaux dérivés de ceux-ci des éléments de détection, dans lequel ledit ensemble de données de fusion comporte respectivement des données pour des grandeurs physiques définies, dans lequel l'ensemble de données de fusion (6) comprend pour au moins une grandeur physique une donnée de ladite grandeur physique et une information concernant la cohérence de ladite donnée de la grandeur physique.

3. Système de détection selon au moins l'une des revendications 1 ou 2, **caractérisé en ce que** le dispositif de traitement de signaux est conçu de manière à ce que l'ensemble de données de fusion défini comporte en outre au moins une donnée d'état d'un élément de détection, laquelle donnée d'état fournit elle-même l'élément de détection au moyen d'un autodiagnostic, dans lequel ladite donnée d'état est prise en compte lors du calcul de l'information concernant la cohérence d'au moins une donnée d'une grandeur physique.

4. Système de détection selon au moins l'une des revendications 1 à 3, **caractérisé en ce que** le dispositif de traitement de signaux est conçu de manière à utiliser respectivement, pour chaque canal de source d'informations de détection, une valeur de mesure et/ou une information de mesure et/ou une valeur dérivée d'une information de mesure et une mesure d'incertitude dudit canal de source d'informations de détection pour calculer l'information de confiance relative.

5. Système de détection selon au moins l'une des revendications 1 à 4, **caractérisé en ce que** le dispositif de traitement de signaux est conçu de manière à ce que, pour l'au moins une donnée d'une grandeur physique, l'information de confiance relative associée soit calculée en tant que mesure de confiance relative $K_r$, où

$$K_r = \frac{\int_{-\infty}^{+\infty} \prod_{i=1}^{i=n} p_i(x, \mu_i, \sigma_i) \cdot dx}{\int_{-\infty}^{+\infty} \prod_{i=1}^{i=n} p_i(x, 0, \sigma_i) \cdot dx}, \quad \text{où} \quad 0 \leq K_r \leq 1$$

et où **n** est défini ou définissable comme étant le nombre des canaux de sources d'informations de détection comparées,
$p_i$, la fonction de densité de probabilité du *i*-ème canal de source d'informations de détection, et en particulier $\mu_i$, la valeur moyenne de la distribution de probabilité, $\sigma_i$, l'écart-type de la distribution de probabilité, et x, la variable d'intégration.

6. Système de détection selon au moins l'une des revendications 1 à 5, **caractérisé en ce que** le dispositif de traitement de signaux est conçu de manière à fournir, en plus d'une mesure de confiance relative en tant qu'information concernant la cohérence pour au moins une donnée d'une grandeur physique, une mesure de confiance absolue en tant qu'information de confiance absolue, qui dépend d'une mesure d'incertitude d'au moins deux canaux de sources d'informations de détection sur la base desquels l'au moins une donnée correspondante de la grandeur physique est calculée.

7. Système de détection selon la revendication 6, **caractérisé en ce que** le dispositif de traitement de signaux est conçu de manière à ce que, pour l'au moins une donnée d'une grandeur physique, l'information de confiance absolue associée soit calculée comme étant la mesure de confiance absolue $K_a$, avec $K_a = \left[\sum_{i=1}^{i=n} \sigma_i^{-2}\right]^{-\frac{1}{2}}$ ou

$K_a = \sqrt{\sum_{i=1}^{i=n} \sigma_i^2}$ et par conséquent, où **n** est le nombre de canaux de sources d'informations de détection comparés et où $\sigma_i$ est l'écart type du i-ème canal de source d'informations de détection.

8. Système de détection selon au moins l'une des revendications 1 à 7, **caractérisé en ce que** le dispositif de traitement de signaux est conçu de manière à ce qu'une évaluation soit effectuée pour au moins une donnée d'une grandeur physique, pour déterminer si la cohérence est suffisamment élevée ou non, dans lequel ladite évaluation est effectuée en déterminant par calcul si l'information de confiance relative et/ou la mesure de confiance relative dépasse une valeur de seuil définie.

9. Système de détection selon au moins l'une des revendications 1 à 8, **caractérisé en ce qu'**une disparition d'un canal de source d'informations de détection est prise en compte dans le calcul des informations concernant la cohérence.

10. Système de détection selon la revendication 9, **caractérisé en ce que** le dispositif de traitement de signaux est conçu de manière à ce que, dans le cas où, au cours d'un intervalle de temps défini dans lequel les données d'au moins un canal de source d'informations de détection sont utilisées pour calculer les informations concernant la cohérence, un seul canal de source d'informations de détection est disponible et/ou un seul canal d'informations de détection fournit une donnée, aucune mesure de confiance relative n'est calculée et **en ce que**, dans ce cas, la valeur 0 ou une valeur rapportée à l'infini ou une valeur définie est prise pour la mesure de confiance absolue ou **en ce que** la mesure de confiance absolue n'est dans ce cas pas calculée.

Fig. 1

EP 2 771 714 B1

Fig. 2

EP 2 771 714 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010063984 A1

**In der Beschreibung aufgeführte Nicht-Patentliteratur**

- **MAYBECK P.** Stochastic Models, Estimation and Control. Elsevier Science and Technology, vol. 1, 1-19